# FASCICULE DE BREVET EUROPEEN

(11) **EP 2 111 098 B1**
(45) Date de publication et mention de la délivrance du brevet: **05.05.2010**
(21) Numéro de dépôt: 07856992.8
(22) Date de dépôt: 20.12.2007
(51) Int. Cl.: A01G 9/12

(54) **DISPOSITIF DE DEROULAGE D'UN FIL SUPPORT SOUPLE POUR PLANTS GRIMPANTS**
VORRICHTUNG ZUR ABWICKLUNG EINES FLEXIBLEN STÜTZDRAHTES FÜR WEINREBEN
DEVICE FOR UNWINDING A FLEXIBLE SUPPORT WIRE FOR VINES

(30) Priorité: 23.01.2007 FR 0700448
(43) Date de publication de la demande: 28.10.2009
(73) Titulaire: A. Raymond et Cie., 38000 Grenoble (FR)
(72) Inventeur: MASSAGUER AGULLO, Miquel, E-08221 Terrassa (ES)
(74) Mandataire: Rüttgers, Joachim
(86) Numéro de dépôt international: PCT/EP2007/011269
(87) Numéro de publication internationale: WO 2008/089834

(56) Documents cités:
- WO-A-96/29855
- WO-A-99/62327
- FR-A1- 2 743 258
- NL-C2- 1 018 107

## Description

### Domaine technique de l'invention

L'invention est relative à un dispositif de déroulage d'un fil support souple pour plants grimpants, dispositif comportant un dévidoir ayant :
- un support muni de moyens de fixation à un câble porteur,
- une bobine d'enroulement dudit fil support, montée à rotation sur le support autour d'un axe de rotation,
- des moyens de retenue en rotation de la bobine d'enroulement, susceptibles d'occuper un état de retenue dans lequel la rotation de la bobine d'enroulement est bloquée et un état de libération dans lequel la rotation de la bobine d'enroulement est libre.

### État de la technique

Les moyens de fixation au câble porteur comprennent généralement un crochet que l'on peut déplacer le long dudit câble qui est tendu horizontalement à une hauteur importante (environ 3 mètres du sol). Le fil support souple, constitué par une corde ou une ficelle, est déroulé depuis le dévidoir. La plante est accrochée et guidée durant sa croissance.

On a développé, lors des dernières années, la méthode de culture « à croissance à prolongement latéral » principalement utilisée, à ce jour, pour la culture des tomates en serre.

Selon cette méthode, la jeune plante est accrochée au fil support vertical se déroulant depuis le dévidoir fixé, sensiblement à la verticale de ladite plante, sur le câble porteur tendu horizontalement à proximité du toit de la serre, c'est-à-dire, généralement à plusieurs mètres du sol. Ce câble porteur est disposé au-dessus d'un alignement de plantes espacées en fonction de la nature de ces dernières.

La plante est guidée par le fil support durant sa croissance et elle est fixée sur celle-ci au fur et à mesure de son développement, au moyen d'attaches appropriées.

Lorsque la partie aérienne porteuse de fruits de la plante atteint une hauteur la rendant difficilement accessible, une certaine longueur supplémentaire de fil support est déroulée et le dévidoir est déplacé le long du câble porteur par translation du support. Ainsi, la partie inférieure improductive de la plante forme une courbe qui vient reposer sur le sol. Cette opération est renouvelée à plusieurs reprises durant la croissance des plantes qui peuvent atteindre des longueurs supérieures à douze mètres (par exemple dans le cas des tomates).

Cette méthode de culture permet d'augmenter le rendement des surfaces cultivées, et de réaliser des économies de main d'oeuvre et d'achat de jeunes plantes.

Le document WO96/29855 décrit un dispositif du type mentionné ci-dessus, dans lequel l'un des flasques de la bobine d'enroulement est muni, de manière solidaire, d'une roue à rochets. Le dévidoir comprend un levier de verrouillage en forme générale de L avec deux branches formant un angle aigu. La grande branche est montée à pivotement sur le support et comporte, entre le point de pivotement et son extrémité libre, une partie saillante orientée vers la roue et constituant un loquet apte à coopérer avec les rochets. La portion de grande branche entre la zone de jonction de la partie saillante et le point de pivotement est flexible et élastique. La petite branche est, quant à elle, destinée à coopérer par son extrémité libre avec le câble porteur qui présente une section adaptée.

L'extrémité libre de la grande branche constitue une zone de poussée manuelle pour provoquer le pivotement du levier de verrouillage jusqu'à mise en contact de l'extrémité libre de la petite branche contre la face supérieure du câble porteur. Le pivotement du levier de verrouillage est alors bloqué. Depuis cet état, si l'opérateur augmente sa poussée, la portion de grande branche entre la zone de jonction de la partie saillante et le point de pivotement se déforme élastiquement. Par une poussée suffisante, la déformation peut être telle qu'elle provoque la libération de la roue à rochets par dégagement du loquet. Le poids de la plante engendre alors la rotation de la bobine et, de manière concomitante, celle de la roue à rochets. Les rochets sont en contact continu avec la face inférieure du câble porteur. La rotation de la roue à rochets, imposée par le poids de la plante, anime le dévidoir d'un mouvement de translation le long du câble porteur dans la direction dans laquelle a été exercée la poussée manuelle.

Ainsi, pour obtenir la libération d'une longueur de fil support, il est nécessaire de prendre en main le support sans décrocher le dévidoir du câble, et d'exercer avec l'autre main une pression sur la grande branche du levier de verrouillage.

Un tel dispositif a cependant pour inconvénient que l'utilisateur doit nécessairement monter sur une échelle ou autre et utiliser simultanément ses deux mains. Aucune de ses mains ne peut alors agripper une rambarde de sécurité pour éviter les chutes en hauteur. Compte tenu du fait que ces manipulations incommodes sont effectuées à plus de 3 mètres du sol, on comprend que ce travail devient dangereux et très pénible (à cause des montées successives sur l'échelle ou autre) si l'on considère qu'une serre peut nécessiter l'emploi de plusieurs milliers de dispositifs de déroulage.

### Objet de l'invention

L'objet de l'invention consiste à réaliser un dispositif de déroulage simple, d'utilisation facile et sans risque pour l'utilisateur.

Selon l'invention, ce but est atteint par un dévidoir tel qu'à la revendication 1.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :

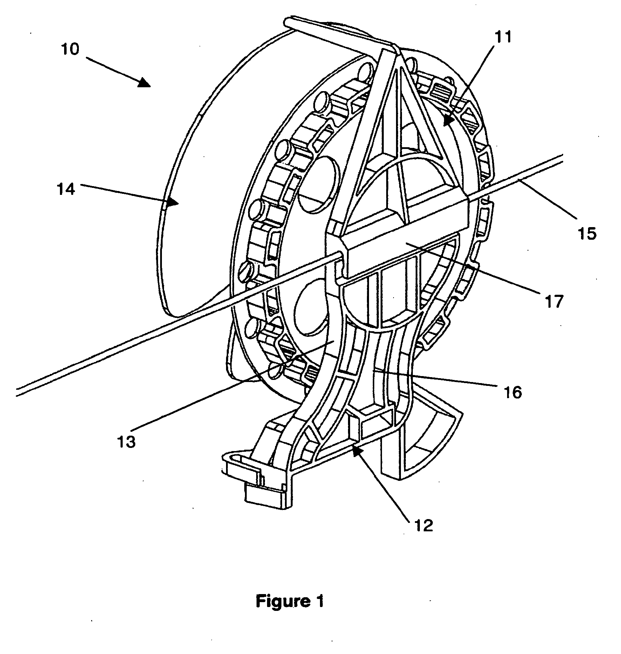

- la figure 1 est une vue en perspective arrière de droite du dévidoir d'un exemple de dispositif de déroulage selon l'invention,

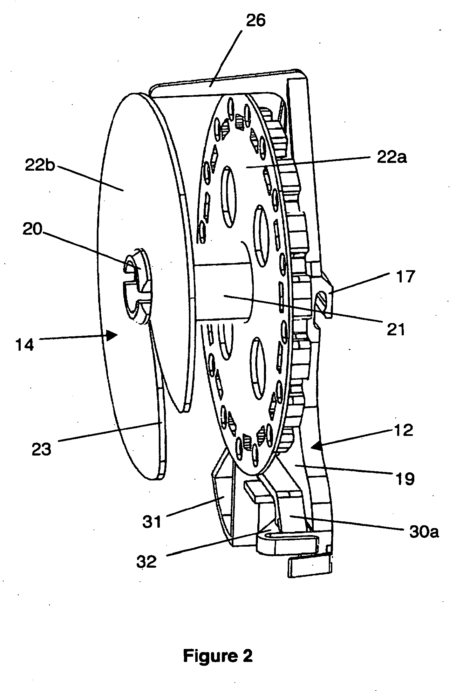

- la figure 2 est une vue en perspective avant de droite du dévidoir de la figure 1,
- la figure 3 est une vue en perspective avant de droite du support du dévidoir des figures 1 et 2,

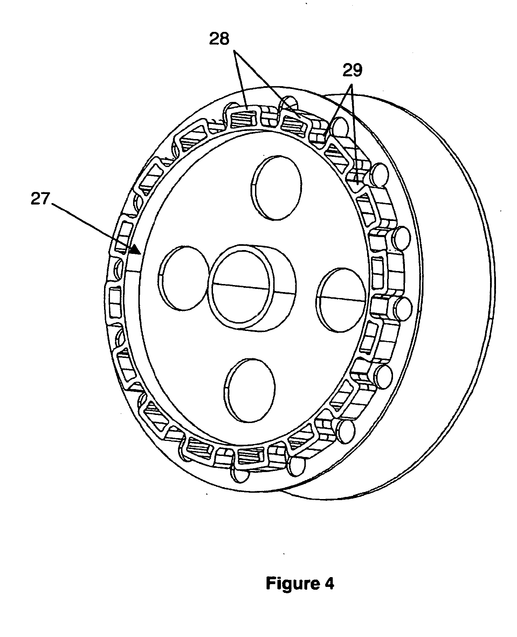

- la figure 4 est une vue en perspective arrière de la bobine d'enroulement du dévidoir des figures 1 et 2.

### Description d'un mode préférentiel de l'invention

En référence aux figures, un exemple de dispositif de déroulage 10 selon l'invention comporte un dévidoir 11 comprenant un support 12 muni d'un cadre plan 13. Le dévidoir 11 se compose en outre d'une bobine 14 d'enroulement d'un fil support souple (non représenté). La bobine 14 est supportée par le support 12. Le dévidoir 11 est destiné à être accroché à un câble porteur 15 disposé à plusieurs mètres du sol, sensiblement à la verticale d'un alignement de plants grimpants espacés en fonction de leur nature. À cet effet, une face arrière 16 du cadre plan 13 comporte dans sa partie supérieure un crochet 17 s'étendant sur toute sa largeur. Ces moyens de fixation classiques permettent un accrochage rapide du dévidoir 11 sur le câble porteur 15, ainsi qu'un déplacement aisé et très rapide du dévidoir 11 le long du câble 15, parfaitement contrôlable par l'utilisateur. Le dévidoir 11 permet de libérer un brin libre de fil support par déroulement de la bobine 14. Le brin libre est destiné à s'étendre sensiblement verticalement jusqu'au sol pour permettre la fixation et le guidage d'un plant grimpant durant sa croissance, au moyen d'attaches appropriées. Le fil support, de section quelconque, peut être une ficelle, une corde, ou tout autre élément en matière souple et adaptée.

Pour assurer la fixation facile et amovible de la bobine 14 sur le support 12, un manchon de montage 18 tubulaire s'étend perpendiculairement depuis la face avant 19 du cadre plan 13 opposée à la face arrière 16, à la même hauteur que le crochet 17. Une butée de retenue 20 fait saillie de la surface extérieure du manchon de montage 18 au niveau de son extrémité distale, c'est-à-dire l'extrémité opposée à l'extrémité de raccordement au cadre plan 13. La butée de retenue 20 se compose d'un épaulement interne raccordé à la surface extérieure du manchon de montage 18, et d'un chanfrein externe.

De manière classique, la bobine 14 comporte un moyeu 21 dont les extrémités supportent des flancs 22a, 22b disposés perpendiculairement au moyeu 21, dont l'un 22a est muni d'une entaille de départ 23 pour le passage de l'extrémité du brin enroulé du fil support afin de pouvoir réaliser sa fixation à l'extérieur du flanc 22a, par exemple grâce à la constitution d'un noeud. Les flancs 22a et 22b ont un contour circulaire.

Pour constituer la butée de retenue 20, le diamètre de la surface externe cylindrique raccordant l'épaulement interne et le chanfrein externe du manchon de montage 18 est supérieur au diamètre intérieur du moyeu 21 de la bobine 14. Afin d'autoriser la mise en place du moyeu 21 de la bobine 14 sur la surface extérieure du manchon de montage 18, des lumières rectilignes 24 s'étendent axialement depuis l'extrémité distale du manchon de montage 18. Lors de la mise en place de la bobine 14, les lumières rectilignes 24 favorisent la déformation radiale du manchon 18 en direction de son axe de révolution. Le chanfrein externe facilite l'engagement de la bobine 14 par l'extrémité libre du manchon 18 en transformant ce mouvement axial en une déformation radiale du manchon 18. Par retour élastique de la matière constitutive du manchon 18, l'épaulement interne assure ensuite la retenue du moyeu 21 de la bobine 14. La bobine 14 se trouve alors montée à rotation sur le support 12 autour d'un axe de rotation correspondant à l'axe de révolution du manchon de montage 18.

La partie supérieure du support 12, c'est-à-dire la partie du support 12 située au-dessus du crochet 17, possède deux bords latéraux 25a, 25b convergents et se rejoignant à l'une de leurs extrémités. Au point de concours des bords 25a, 25b, le support comporte un racleur 26 rectiligne disposé parallèlement au moyeu 21 de la bobine 14 d'enroulement. Le racleur 26 s'étend au-dessus de la bobine 14 d'enroulement. Sa longueur et sa position sont choisies de manière à ce qu'il chevauche le contour des deux flancs 22a, 22b, en laissant toutefois subsister un espace entre lesdits contours et le racleur 26 pour éviter les frottements et limiter le couple résistant dans le mouvement de rotation de la bobine 14 par rapport au support 12. Cet espace est avantageusement choisi pour être inférieur à l'épaisseur du fil support, de manière à ce que le racleur 26 permette de contenir la partie de fil support encore enroulée sur le moyeu 21 dans l'espace compris entre les deux flancs 22a, 22b.

Une roue crantée 27 est formée en saillie de l'une des faces du flanc 22b le plus proche du support 12, et plus précisément en saillie de la face faisant face au support 12. La roue crantée 27 est réalisée par surmoulage sur le flanc 22b ou bien directement pendant le moulage du flanc 22b, de telle manière que la roue crantée est solidaire de la bobine 14 d'enroulement. La roue crantée présente un diamètre inférieur au contour du flanc 22b. La périphérie de la roue crantée est constituée d'une pluralité de crans 28, au nombre de seize, délimitant entre eux autant d'encoches 29. Il va de soi que la roue crantée 27 peut être réalisée de toute manière appropriée, dès lors qu'elle est solidaire de la bobine 14. D'autre part, la roue crantée 27 peut être disposée à proximité de l'autre flanc 22a sans sortir du cadre de l'invention, et notamment par formation en saillie de la face du flanc 22a opposée au support 12.

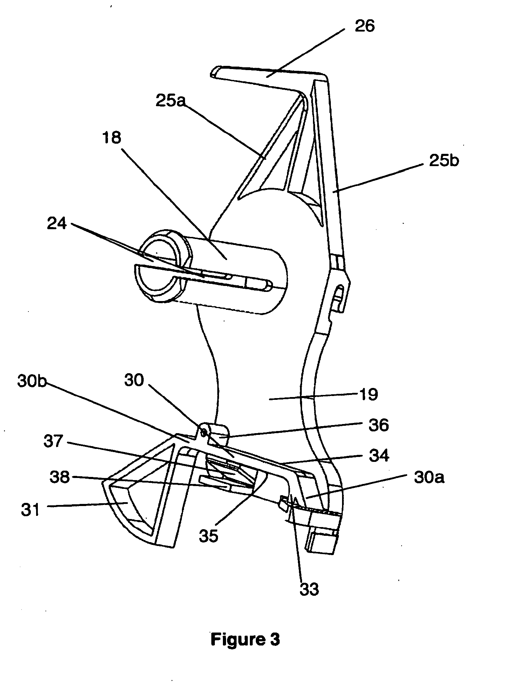

En outre, le dévidoir 11 comporte un bras flexible 30 globalement rectiligne en matière souple et élastique ayant une première extrémité 30a, par exemple recourbée comme sur la figure 3, fixée sur le support 12 et une deuxième extrémité 30b munie d'une boucle fermée 31 plane en forme de triangle dont la base est légèrement arrondie. Le bras flexible 30 s'étend, dans sa configuration naturelle, parallèlement à la face avant 19 du cadre plan 13, avec interposition d'un jeu très faible pour venir s'insérer entre le flanc 22b de la bobine 14 et la face avant 19 du cadre plan 13, par-dessous la bobine 14. Dans cet exemple, le bras flexible 30 est orienté pour être parallèle au crochet 17. Ainsi, le bras flexible 30 est parallèle à la direction du câble porteur 15 lorsqu'il est inséré dans le crochet 17. La première extrémité 30a est liée à une première paroi 32 du support 12 raccordée perpendiculairement à la face avant 19 du cadre plan 13 pour être parallèle au crochet 17. Une nervure de renfort 33 s'étend entre la paroi 32 et le bras flexible 30 pour renforcer la liaison entre le support 12 et le bras flexible 30. La nervure de renfort 33 rejoint le bras flexible 30 au niveau de sa première extrémité 30a.

La section du bras flexible 30 est rectangulaire. Le bras flexible 30 comporte ainsi, d'une part, une première face 34 tournée vers la bobine 14, plus précisément vers la roue crantée 27, ayant un ergot saillant 36, et d'autre part une deuxième face 35 opposée. L'ergot saillant 36 a de préférence globalement la forme d'un parallélépipède rectangle, dont la face supérieure est bombée dans cet exemple. Les dimensions de l'ergot saillant 36 sont choisies pour que les encoches 29 soient de forme complémentaire de l'ergot saillant 36.

Le positionnement relatif entre le bras flexible 30 et la roue crantée 27 est choisi de manière que, lorsque le bras flexible 30 est dans sa configuration naturelle rectiligne, l'ergot saillant 36 porté par le bras flexible 30 est engagé dans une encoche 29 de la roue crantée 27. D'autre part, la longueur du bras flexible 30 et la hauteur de l'ergot saillant 36 sont choisis de manière à ce qu'un effort appliqué sur la boucle fermée 31 du côté opposé à la bobine 14 provoque le dégagement de l'ergot saillant 36 en dehors de l'encoche 29 dans laquelle il était préalablement engagé. Ce dégagement est engendré par le déplacement de l'ergot saillant 36, dans la direction opposée à la roue crantée 27, lequel déplacement est lui-même provoqué par la flexion du bras flexible 30 depuis sa configuration naturelle. La liaison entre le bras flexible 30 et le support 12 est choisie de manière que le mouvement de flexion du bras flexible 30 et, de manière concomitante, le déplacement de l'ergot saillant 36, se pratiquent dans un plan parallèle à la face avant 19 du cadre plan 13.

Par conséquent, le bras flexible 30 équipé de l'ergot saillant 36, en combinaison avec la roue crantée 27 munie des encoches 29, forment des moyens de retenue en rotation de la bobine 14 d'enroulement, susceptibles d'occuper un état de retenue dans lequel la rotation de la bobine 14 d'enroulement est bloquée et un état de libération dans lequel la rotation de la bobine 14 est libre. Dans ces moyens de retenue, l'ergot saillant 36 constitue un élément de retenue coopérant, en position de retenue, avec des éléments de retenue complémentaires (c'est-à-dire les encoches 29) formés à la périphérie de la roue crantée 27 pour empêcher la rotation de la bobine 14. Lorsque l'ergot saillant 36 est en dehors de toute encoche 29, l'ergot saillant 36 qui constitue l'élément de retenue, est en position de libération de la roue crantée 27.

À l'inverse, il est envisageable de prévoir une encoche (non représentée) pratiquée dans la première face 34 du bras flexible 30 pour coopérer avec les crans 28 formés à la périphérie de la roue crantée 27. Dans ce cas, les dimensions et la forme de cette encoche seront choisies pour que les crans 28 soient de forme complémentaire de l'encoche. Dans cette variante non représentée, l'encoche participe aux moyens de retenue en rotation de la bobine 14 et constitue l'élément de retenue coopérant, en position de retenue (position dans laquelle un cran 28 est engagé dans l'encoche pratiquée dans la première face 34 du bras flexible 30), avec des éléments de retenue complémentaires constitués par les crans 28 pour empêcher la rotation de la bobine 14.

Dans cet exemple, la boucle fermée 31 est intégralement disposée en saillie de la deuxième face 35 du bras flexible 30. Mais toute autre configuration de la boucle fermée 31 peut être envisagée, comme par exemple dans le prolongement du bras flexible 30, ou bien intégralement en saillie de la première face 34 du bras flexible 30. D'autre part, la boucle fermée 31 est orientée par rapport au bras flexible 30 de manière que le bras flexible 30 s'étende dans le plan de la boucle fermée 31, mais d'autres orientations sont envisageables, par exemple perpendiculairement, de manière à créer un angle de 90° entre le bras flexible 30 et le plan de la boucle fermée 31. Par ailleurs, la forme de la boucle fermée 31 peut être modifiée.

On comprend de l'exemple précédemment décrit que la boucle fermée 31 fait partie des moyens de commande à distance selon l'invention. La boucle fermée 31 est sur le dévidoir 11 et .constitue des moyens d'accrochage permettant, de préférence, l'accrochage d'un crochet. Ce crochet peut équiper, par exemple, l'extrémité d'une perche de transmission d'efforts. D'autre part, les moyens de retenue en rotation de la bobine 14 comportent :
- au moins un élément de retenue (ergot saillant 36) coopérant, en position de retenue, avec des éléments de retenue complémentaires (encoches 29) formés à la périphérie d'une roue crantée 27 solidaire de la bobine 14. d'enroulement, pour empêcher la rotation de la bobine 14 d'enroulement,
- des moyens de déplacement de l'élément de retenue vers une position de libération de la roue crantée 27,
- des moyens automatiques de rappel de l'élément de retenue vers la position de retenue.
En effet, ces moyens de déplacement et de rappel de l'élément de retenue comportent le bras flexible 30 en matière souple et élastique qui porte l'élément de retenue et qui a une première extrémité 30a fixée sur le support 12 et une deuxième extrémité 30b munie des moyens d'accrochage.

Le fonctionnement du dispositif de déroulage ci-dessus sera mieux compris à la lecture de ce qui suit. Lorsque le bras flexible 30 est dans sa configuration naturelle, c'est-à-dire au repos, les moyens de retenue en rotation de la bobine 14 d'enroulement sont dans l'état de retenue car l'élément de retenue est en position de retenue par engagement dans un élément de retenue complémentaire de la roue crantée 27. La rotation de la bobine 14 est alors bloquée ou empêchée. Un effort appliqué sur la boucle fermée 31 dans une direction opposée à la bobine 14 d'enroulement provoque la flexion du bras flexible 30 depuis sa configuration naturelle. La flexion du bras flexible 30 provoque un déplacement correspondant de l'élément de retenue. Lorsque la flexion du bras flexible 30 est suffisante pour que l'élément de retenue atteigne la position de libération, la roue crantée 27, et par conséquent la bobine 14 d'enroulement, sont libérées ce qui correspond à l'état de libération des moyens de retenue en rotation. La rotation de la bobine 14 est alors libre.

Les moyens automatiques de rappel sont constitués par l'élasticité de la matière constitutive du bras flexible 30 qui a tendance à provoquer le retour du bras flexible 30 vers sa configuration naturelle, en combinaison avec l'élasticité de la matière constitutive d'une lame flexible 37 en matière élastique ayant une première extrémité fixée sur le support 12 et une deuxième extrémité en appui sur la deuxième face 35 du bras flexible 30 opposée à celle 34 tournée vers la bobine 14 d'enroulement. Il est clair que l'effort à appliquer sur la boucle fermée 31 doit être suffisant pour s'opposer aux moyens de rappel. Lorsque l'effort cesse sur la boucle fermée 31, ces moyens de rappel provoquent le retour automatique de l'élément de retenue vers la position de retenue. Les moyens de retenue en rotation de la bobine 14 d'enroulement se trouvent à nouveau dans l'état initial de retenue dans lequel la rotation de la bobine 14 est bloquée.

Dans l'exemple illustré, la lame flexible 37 est fixée à sa première extrémité sur le cadre plan 13 du support 12 et s'étend en s'éloignant du support 12 de telle manière que sa deuxième extrémité soit en contact permanent avec la deuxième face 35 du bras flexible 30. De cette manière, le mouvement de flexion de la lame flexible 37, imposé lors de la flexion du bras flexible 30, se pratique dans un plan perpendiculaire à la face avant 19 du cadre plan. D'autre part, une deuxième paroi 38 s'étend depuis la face avant 19 du cadre plan 13, parallèlement à la première paroi 32 et en dessous de la lame flexible 30. La deuxième paroi 38 constitue une butée dans le mouvement de flexion de la lame flexible 37 et par voie de conséquence dans le mouvement de flexion du bras flexible 30. La deuxième paroi 38 a pour but d'éviter la détérioration de la lame flexible 37 et de la liaison entre le bras flexible 30 et le support 12 dans le cas où un effort trop important est appliqué sur la boucle fermée 31.

Dans d'autres exemples non illustrés, la lame flexible 37 et la deuxième paroi 38 sont supprimées. Les moyens automatiques de rappel sont, dans ce cas, constitués uniquement par l'élasticité de la matière constitutive du bras flexible 30. La matière doit être choisie de manière à ce que son module d'élasticité permette de provoquer, uniquement grâce à la tendance naturelle de retour automatique de la matière vers sa configuration naturelle, le retour du bras flexible 30 vers sa configuration naturelle.

Cette manipulation en vue de dérouler une longueur de fil support souple se pratique très simplement car l'effort appliqué par l'utilisateur sur la boucle fermée 31 peut être transmis depuis le sol. Autrement dit, par l'entremise de la boucle fermée 31, l'utilisateur peut commander à distance le passage des moyens de retenue d'un état à l'autre, en utilisant par exemple une perche de transmission d'efforts munie à une extrémité d'un crochet s'accrochant dans les moyens d'accrochage constitués par la boucle fermée 31. Plus précisément, le dispositif de déroulage 10 décrit ci-dessus comporte donc des moyens de commande à distance pour piloter le passage des moyens de retenue de l'état de retenue vers l'état de libération et inversement. Les moyens de commande à distance comportent ainsi la boucle fermée 31 solidaire du bras flexible 30 et la perche munie d'un tel crochet. Il est bien évident que d'autres outils qu'une perche de transmission d'efforts peuvent être utilisés sans sortir du cadre de l'invention. La commande des moyens de retenue se pratique à distance en ce sens que les moyens de retenue sont pilotés d'un état à l'autre par l'utilisateur situé au sol bien que le dévidoir 11 soit fixé au câble porteur 15 à une hauteur bien supérieure à la hauteur accessible par les mains de l'utilisateur lorsque celui-ci n'utilise pas d'échelle ou autre.

Dans une variante, il est clair que, pour constituer les moyens de retenue, le bras flexible 30 peut être remplacé par un levier rigide monté à pivotement sur le support. Ce levier rigide peut porter sur une face l'élément de retenue (ergot saillant ou encoche) et être équipé à une extrémité de moyens d'accrochage. Le rappel automatique de l'élément de retenue vers la position de retenue peut être réalisé par tout moyen approprié, par exemple à l'aide d'un ressort de torsion rappelant le levier rigide vers une position dans laquelle l'élément de retenue coopère avec la roue crantée 27 pour empêcher la rotation de la bobine 14. Dans cette variante, le déplacement de l'élément de retenue vers la position de libération est obtenu par le pivotement du levier rigide depuis la position de retenue vers une position dans laquelle l'élément de retenue se dégage de la roue crantée 27 et la libère.

Quelle que soit la variante considérée, le bras flexible 30 ou le levier rigide peut être muni d'autres moyens d'accrochage d'un crochet, comme par exemple une boucle ouverte 31 constituant un crochet permettant l'accrochage du crochet de la perche de transmission d'efforts. Par ailleurs, une chaîne ou une ficelle, de longueur la rendant accessible à une extrémité par la main d'un utilisateur debout au sol, peut être fixée à son autre extrémité à la deuxième extrémité 30b du bras flexible 30 opposée à l'extrémité 30a liée au support 12. Cette chaîne ou cette ficelle peut également servir à la commande des moyens de retenue dans la variante où le levier rigide se substitue au bras flexible.

Les moyens de commande à distance décrits ci-dessus correspondent à différentes réalisations de type mécanique, mais ils pourraient indifféremment être réalisés par d'autres types de moyens comme, par exemple, de l'électronique. A titre d'exemple, chaque support peut comporter un levier flexible dont le pivotement, dans les deux sens, est réalisé par un moteur électrique très simple reliée à une électronique dont la commande se fait à distance, par exemple par radiocommande.

## Revendications

1. Dévidoir (11) d'un fil support souple pour plants grimpants, ayant:
- un support (12) muni de moyens de fixation à un câble porteur (15),
- une bobine (14) d'enroulement dudit fil support, montée à rotation sur une face avant (19) du support (12) autour d'un axe de rotation,
- un bras flexible (30) muni de moyens d'accrochage (31) et d'au moins un élément de retenue (36) coopérant, en position de retenue où la rotation de la bobine (14) est bloquée, avec des éléments de retenue complémentaires (29) solidaires de la bobine (14),
- le mouvement de flexion du bras flexible (30) assurant le déplacement de l'élément de retenue (36) vers une position de libération des éléments de retenue complémentaires (29),
**caractérisé en ce que** le support (12) comporte une butée (38) dans le mouvement de flexion du bras flexible (30).

2. Dévidoir selon la revendication 1, **caractérisé en ce que** le bras flexible (30) comporte une extrémité fixée sur le support (12) selon une liaison assurant que le mouvement de flexion du bras flexible (30) se pratique dans un plan parallèle à la face avant (19).

3. Dévidoir selon l'une des revendication et 2, **caractérisé en ce que** l'extrémité du bras flexible (30) opposée à l'extrémité fixée au support (12) est munie desdits moyens d'accrochage.

4. Dévidoir selon l'une des revendications 1 à 3, **caractérisé en ce que** :
- le bras flexible (30) comporte une première face (34) tournée vers la bobine (14) d'enroulement et ayant l'élément de retenue (36), et une deuxième face (35) opposée,
- les moyens d'accrochage (31) sont constitués par une boucle fermée (31) plane et intégralement disposée en saillie de la deuxième face (35) du bras flexible (30).

5. Dévidoir selon l'une des revendications 1 à 4, **caractérisé en ce que** l'élément de retenue (36) est un ergot saillant (36) et les éléments de retenue complémentaires (29) sont des encoches (29) de forme complémentaire de l'ergot saillant (36).

6. Dévidoir selon l'une des revendications 1 à 5, **caractérisé en ce que** les éléments de retenue complémentaires (29) sont formés à la périphérie d'une roue crantée (27) solidaire de la bobine (14).

7. Dévidoir selon l'une des revendications 1 à 6, **caractérisé en ce que** :
- la bobine (14) d'enroulement comporte un moyeu (21) supportant à chaque extrémité un flasque (22a, 22b) disposé perpendiculairement au moyeu (21) et ayant un contour circulaire,
- le support (12) comporte un racleur (26) disposé parallèlement au moyeu (21) de la bobine (14) d'enroulement et chevauchant le contour des deux flasques (22a, 22b).

## Claims

1. Dispenser (11) for flexible support wire for climbing plants, having:
- a support (12) provided with means for fixing it to a support cable (15),
- a spool (14) adapted to have said support wire wound onto it and mounted on a front face (19) of the support (12) to rotate about a rotation axis, and
- a flexible arm (30) provided with attachment means (31) and at least one retaining element (36) cooperating in a retaining position in which rotation of the spool (14) is blocked with complementary retaining elements (29) fastened to the spool (14),
- flexing of the flexible arm (30) moving the retaining element (36) toward a position in which it releases the complementary retaining elements (29),
Characteri+sed in that the support (12) includes an abutment (38) in the flexing movement of the flexible arm (30).

2. Dispenser according to claim 1, **characterised in that** the flexible arm (30) includes an end fixed to the support (12) by a connection ensuring that the flexible arm (30) flexes in a plane parallel to the front face (19).

3. Dispenser according to either of claims 1 and 2, **characterised in that** the end of the flexible arm (30) opposite the end fixed to the support (12) is provided with said attachment means.

4. Dispenser according to any of claims 1 to 3, **characterised in that**
- the flexible arm (30) has a first face (34) facing the winding spool (14) and including the retaining element (36) and an opposite second face (35),
- the attachment means (31) consist of an integral plane closed loop (31) projecting from the second face (35) of the flexible arm (30).

5. Dispenser according to any of claims 1 to 4, **characterised in that** the retaining element (36) is a projecting lug (36) and the complementary retaining elements (29) are notches (29) with a shape complementary to that of the projecting lug (36).

6. Dispenser according to any of claims 1 to 5, **characterised in that** the complementary retaining elements (29) are formed at the periphery of a notched wheel (27) fastened to the spool (14).

7. Dispenser according to any of claims 1 to 6, **characterised in that**:
- the winding spool (14) includes a hub (21) supporting at each end a flange (22a, 22b) disposed perpendicularly to the hub (21) and having a circular contour, and
- the support (12) includes a scraper (26) disposed parallel to the hub (21) of the winding spool (14) and straddling the contour of the two flanges (22a, 22b).

## Patentansprüche

1. Haspel (11) für einen flexiblen Stützdraht für Kletterpflanzen
- mit einer Stütze (12), die über Mittel zur Befestigung an einem Trägerseil (15) verfügt,
- mit einer Spule (14) zum Abwickeln des Stützdrahts, die um eine Rotationsachse drehbar auf einer Vorderseite (19) der Stütze (12) angebracht ist,
- mit einem flexiblen Arm (30), der über Verbindungsmittel (31) und über wenigstens ein Rückhalteelement (36) verfügt, das in der Rückhaltestellung, bei der die Drehung der Spule (14) blockiert ist, mit einstückig mit der Spule (14) ausgebildeten komplementären Rückhalteelementen (29) zusammenwirkt,
- wobei die Biegebewegung des flexiblen Arms (30) das Verschieben des Rückhalteelements (36) in eine Freigabestellung der komplementären Rückhalteelemente (29) sicherstellt,
**dadurch gekennzeichnet, dass** die Stütze (12) in der Biegebewegung des flexiblen Arm (30) einen Anschlag (38) aufweist.

2. Haspel nach Anspruch 1, **dadurch gekennzeichnet, dass** der flexible Arm (30) ein Ende aufweist, das über eine Verbindung an der Stütze (12) befestigt ist, wodurch sichergestellt ist, dass die Biegebewegung des flexiblen Arm (30) in einer zu der Vorderseite (19) parallelen Ebene erfolgt.

3. Haspel nach einem der Ansprüche 1 oder 2, **dadurch gekennzeichnet, dass** das dem an der Stütze (12) befestigten Ende gegenüberliegende Ende des flexiblen Arms (30) über die Verbindungsmittel verfügt.

4. Haspel nach einem der Ansprüche 1 bis 3, **dadurch gekennzeichnet, dass**
- der flexible Arm (30) über eine erste Seite (34), die in Richtung der Abwickelspule (14) ausgerichtet ist und das Rückhalteelement (36) aufweist, und über eine zweite gegenüberliegende Seite (35) verfügt,
- die Verbindungsmittel (31) durch eine flache geschlossene Schleife (31) gebildet sind, die vollständig von der zweiten Seite (35) des flexiblen Arms (30) vorstehend angeordnet ist.

5. Haspel nach einem der Ansprüche 1 bis 4, **dadurch gekennzeichnet, dass** das Rückhalteelement (36) eine vorstehende Nase (36) ist und dass die komplementären Rückhalteelemente (29) Nuten (29) sind, deren Form komplementär zu der vorstehenden Nase (36) ist.

6. Haspel nach einem der Ansprüche 1 bis 5, **dadurch gekennzeichnet, dass** die komplementären Rückhalteelemente (29) am Rand eines einstückig mit der Spule (14) ausgebildeten Zahnrads (27) ausgebildet sind.

7. Haspel nach einem der Ansprüche 1 bis 6, **dadurch gekennzeichnet, dass**
- die Abwickelspule (14) eine Nabe (21) aufweist, die an jedem Ende einen Flansch (22a, 22b) stützt, der rechtwinklig zu der Nabe (21) angeordnet ist und einen kreisförmigen Umfang aufweist,
- die Stütze (12) einen Abstreifer (26) aufweist, der parallel zu der Nabe (21) der Abwickelspule (14) angeordnet ist und über die Umrandung der beiden Flansche (22a, 22b) übersteht.
